# EUROPÄISCHE PATENTSCHRIFT

(11) **EP 2 932 095 B1**
(45) Veröffentlichungstag und Bekanntmachung des Hinweises auf die Patenterteilung: **25.07.2018**
(21) Anmeldenummer: 13798305.2
(22) Anmeldetag: 26.11.2013
(51) Int. Cl.: F03D 13/20, E04H 12/08

(54) **ÜBERGANGSKÖRPER ZUR ANORDNUNG ZWISCHEN UNTERSCHIEDLICH AUSGEFÜHRTEN ABSCHNITTEN EINES WINDKRAFTANLAGENTURMS UND WINDKRAFTANLAGENTURM MIT EINEM SOLCHEN ÜBERGANGSKÖRPER**
TRANSITION BODY FOR ARRANGING BETWEEN DIFFERENTLY DESIGNED SECTIONS OF A WIND POWER PLANT TOWER AND WIND POWER PLANT TOWER WITH SUCH A TRANSITION BODY
ÉLÉMENT DE TRANSITION DESTINÉ À ÊTRE DISPOSÉ ENTRE DES PORTIONS EXÉCUTÉES DIFFÉREMMENT D'UNE TOUR D'ÉOLIENNE ET TOUR D'ÉOLIENNE ÉQUIPÉE DUDIT ÉLÉMENT DE TRANSITION

(30) Priorität: 17.12.2012 DE 102012112415
(43) Veröffentlichungstag der Anmeldung: 21.10.2015
(73) Patentinhaber: ThyssenKrupp Steel Europe AG, 47166 Duisburg (DE)
(72) Erfinder: DREWES, Stephan, 41236 Mönchengladbach (DE); HIRT, Mark, 44791 Bochum (DE); PATON, Adrian, 46539 Dinslaken (DE); SAVVAS, Konstantinos, 40470 Düsseldorf (DE); SCHILLING, Frank, 58239 Schwerte (DE)
(74) Vertreter: thyssenkrupp Intellectual Property GmbH
(86) Internationale Anmeldenummer: PCT/EP2013/074667
(87) Internationale Veröffentlichungsnummer: WO 2014/095252

(56) Entgegenhaltungen:
- EP-A1- 2 072 685
- EP-A1- 2 333 163
- EP-A1- 2 388 479
- EP-A1- 2 597 227
- WO-A1-2005/040605
- GB-A- 2 476 051
- US-B1- 6 320 273

## Beschreibung

Die Erfindung betrifft einen Übergangskörper zur Anordnung zwischen einem unteren Abschnitt und einem oberen Abschnitt eines Turms für eine Windkraftanlage, wobei der untere Turmabschnitt aus mehreren als Hohlprofile ausgebildeten Eckstielen aufgebaut ist und der obere Turmabschnitt in Form eines im Querschnitt im Wesentlichen runden Rohrturms ausgebildet ist, mit einem Boden und einem oberhalb des Bodens angeordneten Anbindungsflansch zur Anbindung des oberen Turmabschnitts, wobei der Boden und der der Anbindung des oberen Turmabschnitts dienende Anbindungsflansch über mindestens ein Mantelblech miteinander verbunden sind, und wobei zumindest die Verbindung des Bodens mit dem mindestens einen Mantelblech als Schweißkonstruktion ausgeführt ist. Insbesondere betrifft die Erfindung einen Turm für eine Windkraftanlage mit einem unteren Turmabschnitt, der aus mehreren als Hohlprofile ausgebildeten Eckstielen gebildet ist, und einem oberen Turmabschnitt in Form eines im Querschnitt im Wesentlichen runden Rohrturms, wobei der obere Turmabschnitt und der untere Turmabschnitt über einen Übergangskörper der vorstehend genannten Art miteinander verbunden sind.

Die Entwicklung bei im Binnenland zu errichtenden Windenergieanlagen geht zu immer höheren Nabenhöhen jenseits von 100 m, um höhere und konstantere Windgeschwindigkeiten zu nutzen und somit den Wirkungsgrad dieser Windenergieanlagen zu verbessern. Höhere rohrförmige Türme mit größeren und leistungsstärkeren Rotoren und Generatoren erfordern aber zugleich eine Vergrößerung der Wandstärken und Durchmesser der Turmsegmente, um die daraus resultierenden größeren strukturmechanischen Anforderungen wie Steifigkeit, Knicksicherheit und Dauerfestigkeit zu erfüllen. Die Vergrößerung der Turmsegmente führt aber auch dazu, dass der Transport der vorgefertigten rohrförmigen Turmsegmente auf vielen Straßen aufgrund von Restriktionen, z.B. Brückendurchfahrtshöhen von 4,4 m, mit der konventionellen querorientierten Bauweise nicht mehr möglich ist.

Ein möglicher Lösungsansatz, der beispielsweise in der DE 603 17 372 T2 und auch in der WO 2009/048955 A1 vorgeschlagen wird, ist die sogenannte längsorientierte Bauweise, insbesondere im unteren Turmbereich, bei dem die Durchmesser der fertigen rohrförmigen Turmsegmente schließlich mehr als 4,4 m betragen. Dabei werden rohrförmige Turmabschnitte erst an der Baustelle, d.h. am Standort der Windkraftanlage, aus mehreren bogenförmigen Schalensegmente zusammengesetzt und die so hergestellten rohrförmigen (ringförmigen) Turmsegmente zum Gesamtturm verbunden. Um das Schweißen in großen Höhen zu vermeiden, werden die Schalensegmente bei der aus der DE 603 17 372 T2 bekannten Turmkonstruktion mit gelochten horizontalen und vertikalen Flanschen versehen, die eine Verbindung der Schalensegmente durch Schrauben ermöglichen. Dieser Lösungsansatz hat jedoch einige Nachteile. So sind z.B. bei großen Schalensegmenten bedingt durch das Eigengewicht der Schalensegmente Verformungen zu erwarten, die während der Montage zu Handhabungs- bzw. Passungsproblemen führen können. Andererseits ist bei einer Unterteilung in viele kleine Schalensegmente die Anzahl der herzustellenden Schraubverbindungen relativ hoch, was die Montage- und auch die Wartungskosten für ein Nachziehen der Schrauben ansteigen lässt.

Neben Windkraftanlagen mit Rohrturm und Windkraftanlagen mit Gitterturm (Fachwerkturm) sind auch Windkraftanlagen mit Türmen in Hybridbauweise bekannt, die einen unteren Gitterturm (Fachwerkturm) und einen damit verbundenen oberen Rohrturm aufweisen.

Aus der DE 10 2006 056 274 A1 ist ein Turm einer Windkraftanlage bekannt, der im unteren Teil einen Gitterturm mit wenigstens drei Eckstielen und im oberen Teil einen im Querschnitt runden Rohrturm aufweist, wobei im Übergangsbereich der obere Anschlussbereich des Unterteils mittels eines Übergangskörpers mit dem unteren Anschlussbereich des Oberteils verbunden ist. Der Übergangskörper ist dabei nach Art eines Kegelstumpfmantels ausgebildet, wobei der jeweilige Eckstiel in den Übergangsbereich hineinragt und im Übergangsbereich zwischen dem oberen Anschlussbereich des Unterteils und dem unteren Anschlussbereich des Oberteils durch zwei Längsschweißnähte mit der Außenseite des Kegelstumpfmantels verbunden ist. Die Eckstiele sind dabei aus standardisierten Hohlprofilen, vorzugsweise aus Stahlrohren gebildet. Zudem weist der Gitterturm sich kreuzende Streben auf, die die Eckstiele miteinander verbinden.
Aus der DE 103 39 438 A1 ist ein Turm für eine Windenergieanlage bekannt, der ebenfalls aus einem als Gitterturm ausgebildeten, mindestens drei Eckstiele aufweisenden unteren Turmabschnitt und einem als rohrförmiger Rohrturm ausgebildeten oberen Turmabschnitt aufgebaut ist, wobei zwischen dem unteren und dem oberen Turmabschnitt ein Übergangsstück (Übergangskörper) angeordnet ist, das einen unteren Bereich und einen oberen Bereich aufweist, wobei der untere Bereich mit dem unteren Turmabschnitt und der obere Bereich mit dem oberen Turmabschnitt verbindbar sind. Der untere Bereich des Übergangsstücks ist dabei so ausgebildet, dass dessen größte horizontale Erstreckung mindestens 30% größer ist als eine horizontale Erstreckung des oberen Bereichs. Das Übergangsstück ist als Gussteil oder Schweißkonstruktion ausgebildet.

Aus der GB 2476051 A und aus der WO 2005/040605 A1 ist ebenfalls jeweils ein Turm für eine Windenergieanlage bekannt.

Der vorliegenden Erfindung liegt die Aufgabe zugrunde, einen Windkraftanlagenturm der eingangs genannten Art zu schaffen, der bei guter Transportierbarkeit seiner Komponenten eine kostengünstige Herstellung und eine vereinfachte Montage seiner Komponenten bietet sowie im montierten Zustand eine hohe Steifigkeit besitzt, insbesondere einen relativ gleichmäßigen Kraftfluss über die gesamte Turmhöhe sicherstellt.

Zur Lösung dieser Aufgabe wird ein Übergangskörper mit den Merkmalen des Anspruchs 1 vorgeschlagen. Bevorzugte und vorteilhafte Ausgestaltungen des erfindungsgemäßen Übergangskörpers sind in den Unteransprüchen angegeben.

Der erfindungsgemäße Übergangskörper ist dadurch gekennzeichnet, dass an der Unterseite seines Bodens eine der Anzahl der Eckstiele des unteren Turmabschnitts entsprechende Anzahl von Anschlussebenen vorgesehen ist, wobei die Anschlussebenen zueinander derart abgewinkelt sind, dass in der Montagestellung des Übergangskörpers die jeweilige Anschlussebene radial nach außen ansteigt.

Der Übergangskörper schafft die Verbindung zwischen dem oberen Turmabschnitt in Form eines im Querschnitt im Wesentlichen runden Rohrturms und dem unteren Turmabschnitt, der aus mehreren als Hohlprofile ausgebildeten Eckstielen gebildet ist. Der untere Turmabschnitt definiert somit eine in mehrere Beine (Eckstiele) aufgelöste Turmstruktur. Vorzugsweise weist der untere Turmabschnitt mindestens drei, besonders bevorzugt mindestens vier Beine (Eckstiele) auf. Er kann somit insbesondere auch fünf oder sechs Beine (Eckstiele) aufweisen.

Die Ausführung des erfindungsgemäßen Übergangskörpers als Schweißkonstruktion bietet gegenüber einer Ausführung als Gussteil mehrere Vorteile. Insbesondere bietet die Schweißkonstruktion den Vorteil, dass sich mit relativ geringem Materialeinsatz die notwendige Bauteilsteifigkeit, insbesondere Biegesteifigkeit erreichen lässt. Die Investitionskosten für die Bauteilherstellung sind bei einer Schweißkonstruktion erheblich geringer als bei einer Ausführung als Gussteil, da die hohen Formbaukosten der Gusskonstruktion entfallen. Des Weiteren bietet die Schweißkonstruktion den Vorteil einer hohen Flexibilität hinsichtlich der Versteifungsmöglichkeiten, indem beispielsweise in dem Übergangskörper Stahlbleche unterschiedlicher Dicke und/oder Materialgüte verbaut werden können. Insbesondere können bei der Ausführung des Übergangskörpers als Schweißkonstruktion in demselben mehrere Innenbleche zur Versteifung eingeschweißt werden, wobei die Anzahl, die Dicke und/oder die Materialgüte der Innenbleche den Steifigkeitserfordernissen entsprechend flexibel ausgewählt bzw. angepasst werden können.

Durch die erfindungsgemäße Anbindung der Eckstiele auf der Unterseite des Übergangskörperbodens wird ein besonders gleichmäßiger Kraftfluss vom runden Rohrturm zu dem die Eckstiele aufweisenden unteren Turmabschnitt erreicht.

Dadurch, dass der Boden des Übergangskörpers erfindungsgemäß an seiner Unterseite eine der Anzahl der Eckstiele entsprechende Anzahl von zueinander abgewinkelten Anschlussebenen aufweist, die so zueinander ausgerichtet sind, dass in der Montagestellung des Übergangskörpers die jeweilige Anschlussebene radial nach außen ansteigt, wird ein direkter Anschluss von orthogonale Anbindungsflansche aufweisenden Standardrohren als Eckstiele ermöglicht. Für den Anschluss von Standardrohren mit orthogonalen Anbindungsflanschen werden somit keine weitere Zwischenelemente (Adapter) benötigt.

Eine vorteilhafte Ausgestaltung des erfindungsgemäßen Übergangskörpers sieht vor, dass der der Anbindung des oberen Turmabschnitts dienende Anbindungsflansch an einer oberen Plattform angebracht ist, die oberhalb des Bodens angeordnet und ebenfalls mit dem mindestens einen Mantelblech verbunden ist. Die Plattform verbessert die Steifigkeit des Übergangskörpers bei hohen Biege- und/oder Torsionsbelastungen des Windkraftanlagenturms.

Eine weitere vorteilhafte Ausgestaltung ist dadurch gekennzeichnet, dass an dem mindestens einen Mantelblech und an der Oberseite des Bodens Innenbleche zur Versteifung des Übergangskörpers angeschweißt sind. Bei Vorhandensein der optionalen oberen Plattform sind die Innenbleche vorzugsweise auch mit dieser Plattform verschweißt.

Zur Erzielung einer hohen Steifigkeit mit möglichst geringem Materialeinsatz im Sinne einer Gewichtsminimierung ist in weiterer Ausgestaltung zudem vorgesehen, dass die Innenbleche des erfindungsgemäßen Übergangskörpers im Wesentlichen radial und vertikal verlaufen.
Hinsichtlich einer einfachen Montage des Übergangskörpers und des oberen Rohrturms sowie zur weiteren Verbesserung der Steifigkeit ist es vorteilhaft, wenn die Innenbleche gemäß einer weiteren Ausgestaltung der Erfindung mit der Mantelfläche eines einen vertikalen Durchgang definierenden Schachtes, insbesondere Rohrschachtes verschweißt sind.
Des Weiteren ist es hinsichtlich einer guten Montage-Zugänglichkeit von Vorteil, wenn das jeweilige Innenblech gemäß einer weiteren Ausgestaltung eine Durchgangsöffnung mit einem Durchmesser von mindestens 60 cm aufweist.
Für die Montage des oberen Rohrturms sowie der Eckstiele ist es ferner zweckmäßig, wenn die obere Plattform eine zentrale Durchgangsöffnung und mindestens eine davon radial beabstandete weitere Durchgangsöffnung aufweist. Über letztere wird ein Zugang zu den Anschlussbereichen der Eckstiele geschaffen.
Eine weitere Ausgestaltung des erfindungsgemäßen Übergangskörpers ist dadurch gekennzeichnet, dass dessen Boden aus plattenförmigen Segmenten zusammengesetzt ist, wobei das jeweilige Segment zwei gerade, konvergierende Seitenkanten aufweist. Diese Ausgestaltung ist in fertigungstechnischer Hinsicht von Vorteil, insbesondere in Bezug auf die abgewinkelte Ausrichtung der den Eckstielen zugeordneten Anschlussebenen.
Die jeweilige Anschlussebene des Übergangskörperbodens ist in weiterer Ausgestaltung des erfindungsgemäßen Übergangskörpers mit auf einem Kreis angeordneten Befestigungsbohrungen zur Anbindung eines Eckstieles versehen. Diese Ausgestaltung ermöglicht eine zuverlässige Befestigung eines an dem Eckstiel angebrachten, vorzugsweise angeschweißten Anbindungsflansches.

Um einerseits den oberen Rohrturm möglichst schlank ausführen und andererseits Standardrohre mit relativ großem Durchmesser als Eckstiele verwenden zu können, ist der erfindungsgemäße Übergangskörper vorzugsweise nach Art eines Kegelstumpfes ausgebildet. Dementsprechend definiert das mindestens eine Mantelblech des Übergangskörpers gegebenenfalls die Mantelfläche eines Kegelstumpfes.
Insbesondere wird die oben angegebene Aufgabe durch einen Turm mit den Merkmalen des Anspruchs 10 gelöst.
Die Eckstiele des Turms können dabei erfindungsgemäß aus mehreren in Längsrichtung miteinander verbundenen Stahlrohrprofilen zusammengesetzt sein, die mit gelochten Flanschen zur Aufnahme von Schrauben versehen sind, wobei die Eckstiele untereinander durch an den Flanschen angebundene Querstreben und/oder Zugstreben verbunden sind.
Die Querstreben sind vorzugsweise aus sich im Wesentlichen horizontal erstreckenden Stahlprofilen gebildet. Die Zugstreben (Diagonalstreben) sind vorzugsweise aus sich diagonal erstreckenden Stahlstreben, insbesondere Stahlprofilen, oder alternativ aus sich diagonal erstreckenden Drahtseilen gebildet.
Nachfolgend wird die Erfindung anhand einer mehrere Ausführungsbeispiele darstellenden Zeichnung näher erläutert. Es zeigen schematisch:
- Fig. 1: einen erfindungsgemäßen Turm einer Windkraftanlage, in perspektivischer Darstellung;

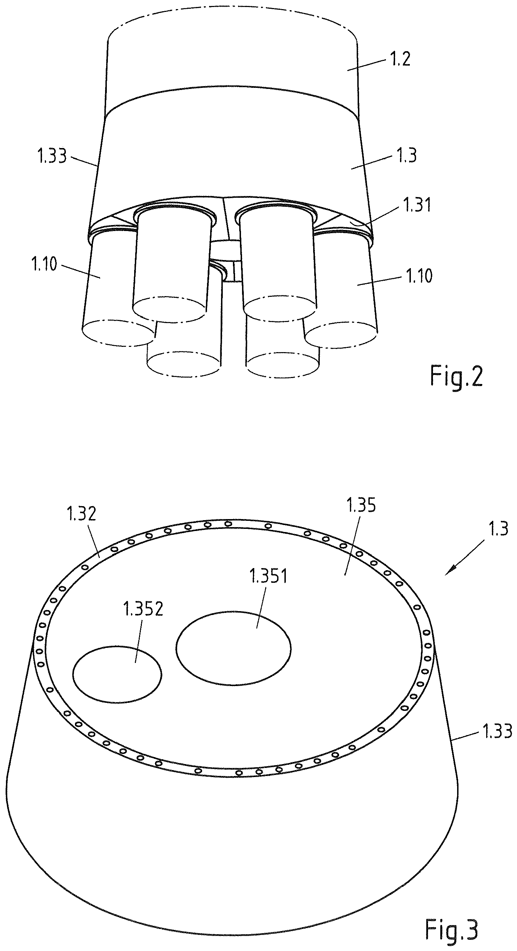

- Fig. 2: einen Längenabschnitt des Turms der Fig. 1 mit dem Übergang von dem Eckstiele aufweisenden unteren Turmabschnitt zum oberen runden Rohrturm;
- Fig. 3: den Übergangskörper des Turms der Fig. 1, in perspektivischer Ansicht von oben;

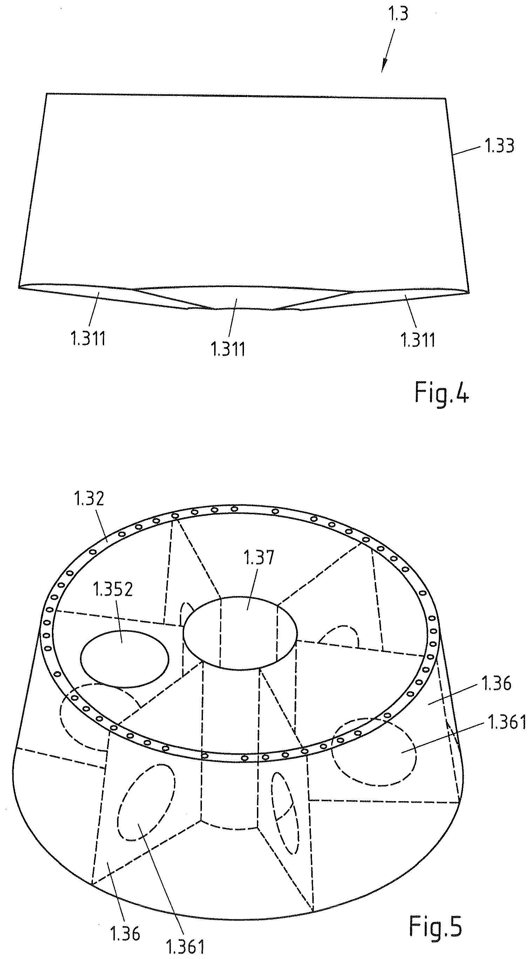

- Fig. 4: den Übergangskörper der Fig. 3, in Seitenansicht;
- Fig. 5: den Übergangskörper der Fig. 3 mit gestrichelt dargestellten Innenteilen, in perspektivischer Ansicht von oben;

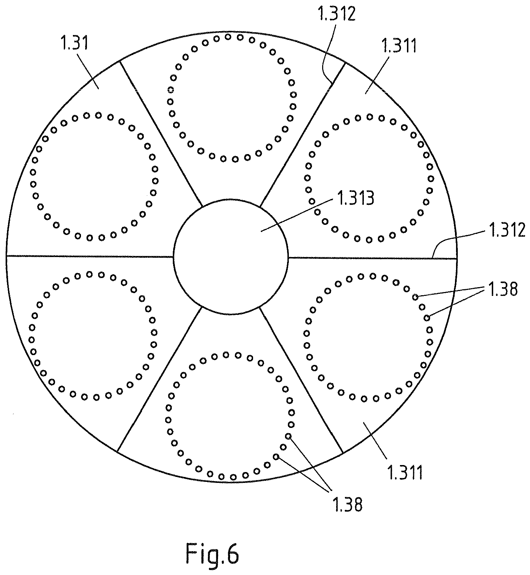

- Fig. 6: den Übergangskörper der Fig. 3, in Unteransicht;
- Fig. 7: einen unteren Abschnitt eines weiteren erfindungsgemäßen Turms einer Windkraftanlage, in perspektivischer Darstellung;
- Fig. 8: einen Längenabschnitt des unteren Turmabschnitts der Fig. 7 im Bereich der Verbindung von Stahlrohrprofilen zweier Eckstiele, in Vorderansicht; und
- Fig. 9: einen Abschnitt zweier miteinander verbundener Diagonalstreben des unteren Turmabschnitts der Fig. 7.

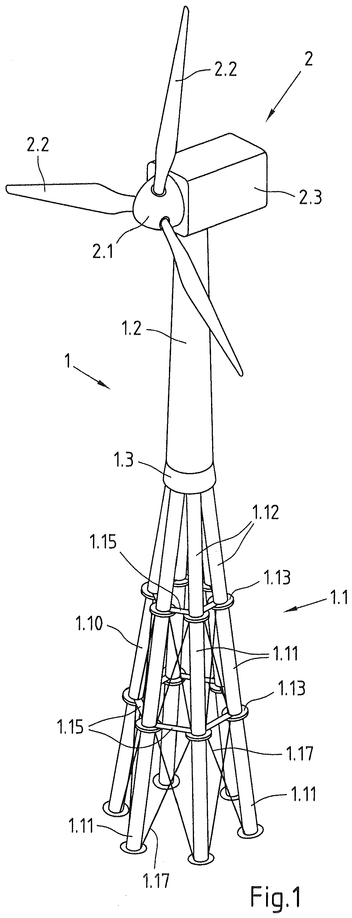

Der in Fig. 1 dargestellte Turm 1 einer Windkraftanlage 2 ist aus einem mehrere Eckstiele aufweisenden Unterteil 1.1 und einem Oberteil 1.2 in Form eines im Querschnitt runden Rohrturms aufgebaut.

Am oberen Ende des Rohrturms 1.2 ist eine Windkraftanlage (Windenergieanlage) 2 montiert, die um eine im Wesentlichen vertikal verlaufende Achse drehbar gelagert ist. Die Windkraftanlage 2 umfasst einen Rotor 2.1 mit Rotorblättern 2.2, die vorzugsweise um ihre jeweilige Längsachse drehbar und somit im Wesentlichen stufenlos anstellbar sind, und einen im Gondelgehäuse 2.3 angeordneten Generator, dessen Welle über ein Getriebe und eine Kupplung mit dem Rotor 2.1 drehstarr verbunden ist.

Der untere Turmabschnitt 1.1 weist in dem hier gezeigten Ausführungsbeispiel sechs Eckstiele 1.10 auf. Er kann aber auch mehr oder weniger als sechs Eckstiele besitzen. In jedem Fall weist er mindestens drei Eckstiele 1.10 auf, deren horizontaler Abstand voneinander ausgehend vom oberen Rohrturm 1.2 in Richtung Boden bzw. Fundament zunimmt. Die vorzugsweise im Wesentlichen geradlinigen Eckstiele 1.10 bilden somit eine drei- bzw. mehrbeinige Turmkonstruktion, deren Beine spitzwinklig zueinander gespreizt sind. Der untere Turmabschnitt 1.1 kann auch als aufgelöste Turmstruktur bezeichnet werden.

Jeder der Eckstiele 1.10 ist vorzugsweise aus mindestens drei in Längsrichtung miteinander verbundenen Stahlrohrprofilen 1.11, 1.12 zusammengesetzt, die hierzu an ihren Verbindungsstellen mit gelochten Flanschen 1.13 zur Aufnahme von beispielsweise Schrauben (nicht gezeigt) versehen sind. Die Flansche 1.13 sind beispielsweise als Ringflansche ausgebildet. Der jeweilige Flansch bzw. Ringflansch 1.13 hat eine Mehrzahl von Durchgangslöchern, die auf einem gemeinsamen Teilkreis gleichmäßig voneinander beabstandet angeordnet sind.

Vorzugsweise handelt es sich bei den für die Eckstiele 1.10 verwendeten Stahlrohrprofilen 1.11, 1.12 um Gleichteile, die längsnahtgeschweißt oder spiralnahtgeschweißt sind. Die zu ihrer Herstellung verwendeten bogenförmigen oder in eine runde Form umgeformten Stahlbleche sind beispielsweise warmgewalzte Stahlbleche mit einer Streckgrenze von mindestens 350 N/mm². Für die Herstellung der Stahlrohrprofile der Eckstiele 1.10 können allerdings auch höherfeste Stahlbleche verwendet werden, z.B. Stahlbleche mit einer Streckgrenze im Bereich von 500 bis 700 N/mm².

Die Stahlrohre 1.11, 1.12 des jeweiligen Eckstiels 1.10 haben vorzugsweise eine Wanddicke im Bereich von 5 mm bis 30 mm. Ihr Durchmesser liegt z.B. im Bereich von 500 mm bis 1.900 mm. Bevorzugt sind die für die Eckstiele 1.10 verwendeten Stahlrohre 1.11, 1.12 aus im Wesentlichen geradlinigen Standardrohren hergestellt.

Der jeweilige Ringflansch 1.13 ist vorzugsweise stoffschlüssig an einem der Enden des zum Aufbau eines Eckstiels 1.10 verwendeten Stahlrohres 1.11, 1.12 angebracht, beispielsweise mittels Kehlnahtschweißung. Möglich ist aber auch eine kraft-und/oder formschlüssige Verbindung zwischen Ringflansch 1.13 und dem zugeordneten Stahlrohrende, beispielsweise durch Verschraubung, bei der das Stahlrohrende mit einem Außengewinde und der Ringflansch mit einem entsprechenden Innengewinde versehen sind.

Der jeweilige Ringflansch 1.13 liegt in einer orthogonal zur Längsachse des Stahlrohres verlaufenden Ebene.

Die Eckstiele 1.10 sind untereinander durch Querstreben 1.15 verbunden. Hierzu werden die gleichen Ringflansche 1.13 verwendet, welche die Stahlrohre 1.11, 1.12, vorzugsweise Standardrohre, miteinander verbinden.

Die Querstreben 1.15 sind aus Stahlprofilen gebildet und erstrecken sich im Wesentlichen horizontal. Diejenigen Querstreben 1.15, die auf gleicher Höhe angeordnet sind, sind als Gleichteile ausgeführt. Die Länge der Querstreben 1.15 hängt dabei von ihrer Anbindungshöhe ab. Mit zunehmender Turmhöhe verringert sich die Länge der an den Ringflanschen 1.13 angebundnen Querstreben 1.15.

Der erfindungsgemäße Turm 1, zumindest sein unterer Abschnitt 1.1, weist somit einen modularen Aufbau unter Verwendung von standardisierten Stahlprofilen 1.11, 1.12, 1.15 auf. Die Querstreben 1.15 sind beispielsweise als U-Profil ausgeführt. Sie können aber auch eine andere Profilform aufweisen, z.B. ein L-Profil oder T-Profil.

Der untere, mehrbeinige Turmabschnitt 1.1 ist über einen als Adapter fungierenden Übergangskörper 1.3 mit dem Rohrturm 1.2 verbunden. Der Übergangskörper 1.3 ist als im Wesentlichen geschlossene Schweißkonstruktion ausgeführt. Er weist einen Boden und einen oberhalb des Bodens angeordneten Anbindungsflansch (Ringflansch) zur Anbindung des oberen Turmabschnitts auf, wobei der Boden 1.31 und der Anbindungsflansch 1.32 über mindestens ein Mantelblech 1.33 miteinander verbunden sind.

Des Weiteren ist der Übergangskörper 1.3 mit einer oberen Plattform 1.35 versehen, auf deren Oberseite der der Anbindung des oberen Turmabschnitts 1.2 dienende Anbindungsflansch 1.32 angebracht ist. Die Plattform 1.35 ist ebenfalls mit dem Mantelblech 1.33 verbunden. Der Boden 1.31 stellt einen unteren Abschluss und die dazu im vertikalen Abstand angeordnete Plattform 1.35 einen oberen Abschluss des Übergangskörpers 1.3 dar. Der Boden 1.31 weist einen runden oder im Wesentlichen kreisförmigen Umfangsrand auf, dessen Durchmesser vorzugsweise um mindestens 10% größer ist als der Außendurchmesser des oberen Anbindungsflansches 1.32 bzw. der Außendurchmesser der im Wesentlichen kreisförmigen Plattform 1.35. Der Übergangskörper 1.3 ist somit kegelstumpfförmig ausgebildet. Die konische Mantelfläche 1.33 ist dabei vorzugsweise aus zwei oder mehr Blechen bzw. Mantelteilen zusammengesetzt. Alternativ können der runde bzw. kreisförmige Boden 1.31 und der Anbindungsflansch 1.32 aber auch einen im Wesentlichen gleichen Außendurchmesser aufweisen, so dass die Mantelfläche 1.33 dann zylindrisch ausgebildet ist.

Im Boden 1.31 sowie in der oberen Plattform (Abschlussplatte) 1.35 sind jeweils mittig angeordnete Durchgangsöffnungen 1.313 bzw. 1.351 ausgespart, die als Montage-Durchgang dienen. Die Durchgangsöffnungen 1.313, 1.351 sind an einem zylindrischen Schacht (Rohrabschnitt) 1.37 angeschlossen. Der Schacht 1.37 mündet also an den Durchgangsöffnungen 1.313, 1.351. Der Innendurchmesser des Schachtes 1.37 beträgt beispielsweise ca. 1,2 m.

Innerhalb des Übergangskörpers 1.3 sind Innenbleche 1.36 zur Versteifung desselben vorgesehen. Die Innenbleche 1.36 sind mit dem Boden 1.31, der Plattform 1.35, der Mantelfläche 1.33 und dem Schacht 1.37 verschweißt. Vorzugsweise sind die Innenbleche 1.36 im Wesentlichen vertikal ausgerichtet und im Wesentlichen gleichmäßig voneinander beabstandet über den Umfang des zylindrischen Schachtes 1.37 verteilt angeordnet.
Die radial ausgerichteten Innenbleche 1.36 sind mit Durchgangsöffnungen 1.361 versehen, die als Montage-Durchgang dienen. Um einen Zugang in eine der durch die Innenbleche 1.36 begrenzten Kammern des Übergangskörpers 1.3 zu schaffen, weist die obere Plattform 1.35 neben der zentralen Durchgangsöffnung 1.351 mindestens eine davon radial beabstandete weitere Durchgangsöffnung 1.352 auf. Der Durchmesser der Durchgangsöffnungen 1.361, 1.352 beträgt mindestens 60 cm, vorzugsweise mindestens 90 cm.
Auf der Unterseite des Übergangskörperbodens 1.31 ist eine der Anzahl der Eckstiele 1.10 entsprechende Anzahl von Anschlussebenen vorgesehen. Die Anschlussebenen sind zueinander abgewinkelt, so dass in Montagestellung des Übergangskörpers 1.3 die jeweilige Anschlussebene radial nach außen ansteigt. Die Unterseite des Bodens 1.31 des Übergangskörpers 1.3 weist somit eine Facettenstruktur auf. Die jeweilige Anschlussebene ist dabei mit Befestigungsbohrungen 1.38 zur Anbindung eines Eckstieles 1.10 versehen. Die der Aufnahme von Schrauben dienenden Befestigungsbohrungen 1.38 sind auf einem gemeinsamen Teilkreis angeordnet.
Der Boden 1.31 ist aus plattenförmigen Segmenten 1.311 zusammengesetzt, wobei das jeweilige Segment 1.311 zwei gerade, konvergierende Seitenkanten 1.312 aufweist. Ebenso kann auch die obere Plattform (Abschlussplatte) 1.35 aus mehreren plattenförmigen Segmenten zusammengesetzt sein, die jeweils gerade, konvergierende Seitenkanten besitzen.
Um die erforderliche Stabilität des Gesamtturms 1 zu gewährleisten bzw. weiter zu erhöhen, können zusätzliche Zugstreben 1.17 vorgesehen werden, die jeweils im Flanschbereich befestigt werden, so dass sie diagonal in dem Fachwerkrahmen verlaufen, der durch zwei benachbarte Eckstiele 1.10 und zwei im Wesentlichen parallel zueinander verlaufende Querstreben 1.15 definiert ist.

Die Zugstreben (Diagonalstreben) 1.17 sind beispielsweise aus Drahtseilen gebildet. Die Enden der Drahtseile 1.17 sind über geeignete Befestigungsmittel an den Durchgangsöffnungen der Ringflansche 1.13 befestigt. Zum Zwecke ihrer Längenanpassung können die Zugstreben bzw. Drahtseile 1.17 jeweils mit einer Spannvorrichtung (nicht gezeigt) versehen sein.

Der untere Turmabschnitt 1.1 des erfindungsgemäßen Turms 1 ist somit nicht in einer klassischen Gittermastbauweise ausgeführt, sondern durch Verwendung von orthogonale Anbindungsflansche 1.13 aufweisenden Hohlprofilen, vorzugsweise Standardrohren, mit einzelnen, durch lösbare Befestigungsmittel angebrachten Quer- und/oder Diagonalstreben 1.15 bzw. 1.17.

Der obere Turmteil 1.2, der als im Querschnitt runder Rohrturm ausgebildet ist, beginnt ab einer Höhe von z.B. ca. 60 m. Er kann in konventioneller, querorientierter Bauweise ausgeführt sein und dementsprechend aus mehreren ringförmigen Rohrsegmenten zusammengesetzt sein. Der Rohrturm 1.2 ist vorzugsweise als konischer Stahlrohrturm ausgeführt. Alternativ kann er aber auch als zylindrischer Stahlrohrturm ausgeführt werden. Die Höhe des Gesamtturms 1 bzw. die Nabenhöhe des Rotors 2.1 beträgt zum Beispiel ca. 110 m.

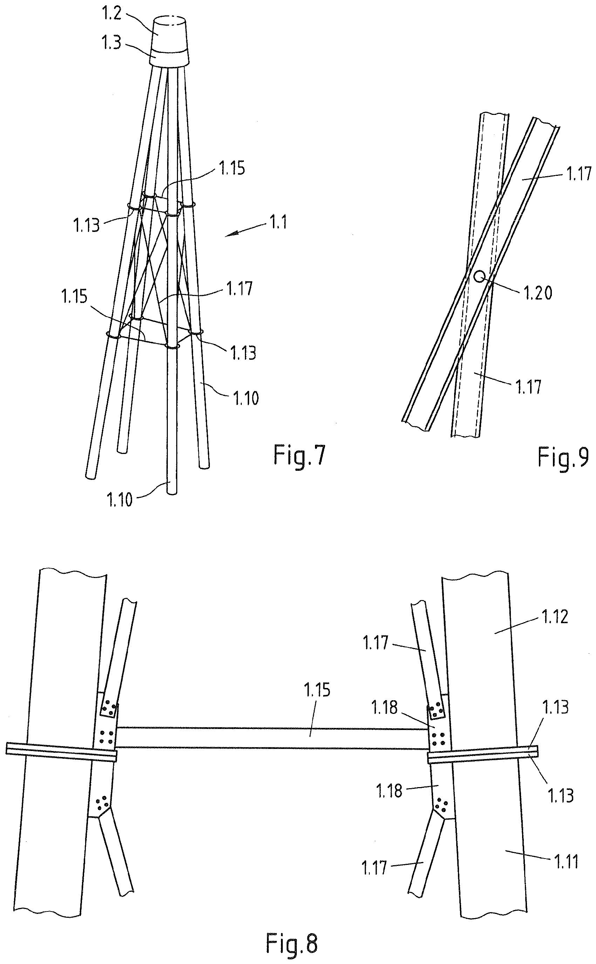

In Fig. 7 ist ein weiteres Ausführungsbeispiel des mehrbeinigen Abschnitts 1.1 eines erfindungsgemäßen Turms einer Windkraftanlage dargestellt. Der obere Abschnitt des Turms, der ähnlich wie in Fig. 1 aus einem im Querschnitt im Wesentlichen runden Rohrturm gebildet ist, ist in Fig. 7 nicht gezeigt.

Der untere mehrbeinige Turmabschnitt 1.1 weist in diesem Ausführungsbeispiel vier Eckstiele 1.10 auf, die jeweils aus mindestens drei in Längsrichtung miteinander verbundenen Stahlrohrprofilen 1.11, 1.12 zusammengesetzt sind. Die Stahlrohre 1.11, 1.12 sind hierzu an ihren Verbindungsstellen mit gelochten Flanschen 1.13 zur Aufnahme lösbarer mechanischer Verbindungsmittel, z.B. Schrauben, versehen. Jeder der Flansche 1.13 weist eine Mehrzahl von Durchgangslöchern zur Aufnahme der Verbindungsmittel auf.

Des Weiteren können an den Verbindungsstellen bzw. Enden der Stahlrohrprofile 1.11, 1.12 Laschen 1.18 angebracht sein. Die Lasche und der Flansch 1.13 sind mit dem Stahlrohr 1.11 bzw. 1.12 verschweißt, wobei die Lasche 1.18 im Wesentlichen senkrecht zu dem Flansch 1.13 ausgerichtet ist (vgl. Fig. 8).

Das Ausführungsbeispiel gemäß den Figuren 7 und 8 bietet die Möglichkeit, die Enden der Stahlrohrprofile 1.11, 1.12 im Wesentlichen senkrecht (rechtwinklig) zu ihrer Längsachse abzulängen, d.h. ein Abschrägen der Rohrenden ist nicht erforderlich. Die Anbindung der Querstreben 1.15 an die Stahlrohre 1.11, 1.12 ist dann trotz ihrer im Wesentlichen rechtwinkligen Schnittenden bzw. der im Wesentlichen senkrechten Ausrichtung der Flansche 1.13 bezogen auf die Stahlrohrlängsachse ohne Umbiegen der Enden der Querstreben 1.15 möglich, da letztere in diesem Fall an den Laschen 1.18 angebunden werden. Die Laschen 1.18 ermöglichen somit einen Ausgleich des Anbindungswinkels zwischen Querstrebe 1.15 und der Stahlrohrlängsachse bei beliebigen Neigungswinkeln der Stahlrohrlängsachse (Eckstiellängsachse).

Die Diagonalstreben 1.17, die in dem Ausführungsbeispiel gemäß den Figuren 7 bis 9 als Kantteile oder Walzprofile ausgeführt sind, sind vorzugsweise in ihrem Kreuzungsbereich 1.20 miteinander verbunden. Zur Verbindung bzw. Fixierung der Diagonalstreben 1.17 im Kreuzungsbereich 1.20 dienen wiederum mechanische lösbare Verbindungsmittel, z.B. Schrauben. Die Verbindung bzw. eine Vorfixierung der Diagonalstreben 1.17 im Kreuzungsbereich 1.20 kann bereits im Zuge der Vorfertigung der Diagonalstreben 1.17 erfolgen, wodurch die Montage des Gitter- oder Fachwerkturms 1.1 am Aufstellungsort des erfindungsgemäßen Turms vereinfacht bzw. verkürzt wird.

Die Ausführung des erfindungsgemäßen Turms ist nicht auf die in der Zeichnung dargestellten Ausführungsbeispiele beschränkt. Vielmehr sind zahlreiche Varianten denkbar, die auch bei einer von dem gezeigten Ausführungsbeispiel abweichenden Gestaltung von der in den beiliegenden Ansprüchen angegebenen Erfindung Gebrauch machen. So können an den Flanschen 1.13 der Eckstielrohre 1.11, 1.12 beispielsweise anstelle von Stahlseilen 1.17 auch Stahlprofilstäbe, z.B. L-profilförmige Kantteile als diagonale Zugstreben angebunden sein.

Bei größeren Windkraftanlagen kann der erfindungsgemäße Übergangskörper 1.3 aus zwei oder mehr vorzugsweise radial geteilten, symmetrischen Teilen aufgebaut sein.

## Patentansprüche

1. Übergangskörper (1.3) zur Anordnung zwischen einem unteren Abschnitt und einem oberen Abschnitt eines Turms für eine Windkraftanlage, wobei der untere Turmabschnitt (1.1) aus mehreren als Hohlprofile ausgebildeten Eckstielen (1.10) aufgebaut ist und der obere Turmabschnitt (1.2) in Form eines im Querschnitt im Wesentlichen runden Rohrturms ausgebildet ist, mit einem Boden (1.31) und einem oberhalb des Bodens angeordneten Anbindungsflansch (1.32) zur Anbindung des oberen Turmabschnitts (1.2), wobei der Boden (1.31) und der der Anbindung des oberen Turmabschnitts dienende Anbindungsflansch (1.32) über mindestens ein Mantelblech (1.33) miteinander verbunden sind, und wobei zumindest die Verbindung des Bodens (1.31) mit dem mindestens einen Mantelblech (1.33) als Schweißkonstruktion ausgeführt ist, wobei an der Unterseite des Bodens (1.31) eine der Anzahl der Eckstiele (1.10) des unteren Turmabschnitts (1.1) entsprechende Anzahl von Anschlussebenen vorgesehen ist, wobei die Anschlussebenen zueinander derart abgewinkelt sind, dass in der Montagestellung des Übergangskörpers (1.3) die jeweilige Anschlussebene radial nach außen ansteigt, wobei der Boden (1.31) aus plattenförmigen Segmenten (1.311) zusammengesetzt ist, wobei das jeweilige Segment (1.311) zwei gerade, konvergierende Seitenkanten (1.312) aufweist, wobei die jeweilige Anschlussebene des Bodens (1.31) mit auf einem Kreis angeordneten Befestigungsbohrungen (1.38) zur Anbindung eines der Eckstiele (1.10) versehen ist.

2. Übergangskörper nach Anspruch 1, **dadurch gekennzeichnet, dass** der der Anbindung des oberen Turmabschnitts (1.2) dienende Anbindungsflansch (1.32) an einer oberen Plattform (1.35) angebracht ist, die oberhalb des Bodens (1.31) angeordnet und ebenfalls mit dem mindestens einen Mantelblech (1.33) verbunden ist.

3. Übergangskörper nach Anspruch 1 oder 2, **dadurch gekennzeichnet, dass** an dem mindestens einen Mantelblech (1.33) und an der Oberseite des Bodens (1.31) Innenbleche (1.36) zur Versteifung des Übergangskörpers (1.3) angeschweißt sind.

4. Übergangskörper nach den Ansprüchen 2 und 3, **dadurch gekennzeichnet, dass** die Innenbleche (1.36) auch mit der oberen Plattform (1.35) verschweißt sind.

5. Übergangskörper nach Anspruch 3 oder 4, **dadurch gekennzeichnet, dass** die Innenbleche (1.36) im Wesentlichen radial und vertikal verlaufen.

6. Übergangskörper nach einem der Ansprüche 3 bis 5, **dadurch gekennzeichnet, dass** die Innenbleche (1.36) mit der Mantelfläche (1.33) eines einen vertikalen Durchgang definierenden Schachtes (1.37), insbesondere Rohrschachtes verschweißt sind.

7. Übergangskörper nach einem der Ansprüche 3 bis 6, **dadurch gekennzeichnet, dass** das jeweilige Innenblech (1.36) eine Durchgangsöffnung (1.361) mit einem Durchmesser von mindestens 60 cm aufweist.

8. Übergangskörper nach Anspruch 2 oder einem der Ansprüche 3 bis 7 in Kombination mit Anspruch 2, **dadurch gekennzeichnet, dass** die obere Plattform (1.35) eine zentrale Durchgangsöffnung (1.351) und mindestens eine davon radial beabstandete weitere Durchgangsöffnung (1.352) aufweist.

9. Übergangskörper nach einem der Ansprüche 1 bis 8, **dadurch gekennzeichnet, dass** das mindestens eine Mantelblech (1.33) die Mantelfläche eines Kegelstumpfes definiert.

10. Turm für eine Windkraftanlage mit einem unteren Turmabschnitt (1.1), der aus mehreren als Hohlprofile ausgebildeten Eckstielen (1.10) gebildet ist, und einem oberen Turmabschnitt (1.2) in Form eines im Querschnitt im Wesentlichen runden Rohrturms, **dadurch gekennzeichnet, dass** der obere Turmabschnitt (1.2) und der untere Turmabschnitt (1.1) über einen Übergangskörper (1.3) nach einem der Ansprüche 1 bis 9 miteinander verbunden sind.

11. Turm nach Anspruch 10, **dadurch gekennzeichnet, dass** der jeweilige Eckstiel (1.10) aus mehreren in Längsrichtung miteinander verbundenen Stahlrohrprofilen zusammengesetzt ist, die mit gelochten Flanschen (1.13) zur Aufnahme von Schrauben versehen sind, wobei die Eckstiele (1.10) untereinander durch an den Flanschen (1.13) angebundene Querstreben (1.15) und/oder Zugstreben (1.17) verbunden sind.

12. Turm nach Anspruch 11, **dadurch gekennzeichnet, dass** die Querstreben (1.15) aus sich im Wesentlichen horizontal erstreckenden Stahlprofilen gebildet sind.

13. Turm nach Anspruch 11 oder 12, **dadurch gekennzeichnet, dass** die Zugstreben (1.17) aus sich diagonal erstreckenden Drahtseilen gebildet sind.

## Claims

1. Transition body (1.3) to be arranged between a lower section and an upper section of a tower for a wind energy plant, wherein the lower tower section (1.1) is constructed from several corner posts (1.10) configured as hollow profiles and the upper tower section (1.2) is configured in the form of a tubular tower which is essentially round in cross section, with a bottom (1.31) and a connection flange (1.32) disposed above the bottom for connecting the upper tower section (1.2), wherein the bottom (1.31) and the flange (1.32) serving to connect the upper tower section are joined together by at least one metal casing sheet (1.33), and wherein at least the connection of the bottom (1.31) to the at least one metal casing sheet (1.33) is a welded construction, wherein a number of connection areas is provided on the underside of its bottom (1.31), corresponding to the number of corner posts (1.10) of the lower tower section (1.1), wherein the connection areas are angled relative to each other so that the respective connection area increases radially outward in the assembled state of the transition body (1.3), wherein the bottom (1.31) is composed of platelike segments (1.311), wherein the particular segment (1.311) has two straight converging side edges (1.312), wherein the particular connection area of the bottom (1.31) is provided with fastening boreholes (1.38) arranged on a circle for the connecting of one of the corner posts (1.10).

2. Transition body according to Claim 1, **characterized in that** the connection flange (1.32) serving for the connection of the upper tower section (1.2) is arranged on an upper platform (1.35), which is situated above the bottom (1.31) and is likewise connected to the at least one metal casing sheet (1.33).

3. Transition body according to Claim 1 or 2, **characterized in that** inner plates (1.36) for stiffening of the transition body (1.3) are welded onto the at least one metal casing sheet (1.33) and the top side of the bottom (1.31).

4. Transition body according to Claims 2 and 3, **characterized in that** the inner plates (1.36) are also welded to the upper platform (1.35).

5. Transition body according to Claim 3 or 4, **characterized in that** the inner plates (1.36) run essentially radially and vertically.

6. Transition body according to one of Claims 3 to 5, **characterized in that** the inner plates (1.36) are welded to the metal casing sheet (1.33) of a shaft (1.37) defining a vertical passageway, especially a tubular shaft.

7. Transition body according to one of Claims 3 to 6, **characterized in that** the particular inner plate (1.36) has a through opening (1.361) with a diameter of at least 60 cm.

8. Transition body according to Claim 2 or one of Claims 3 to 7 in combination with Claim 2, **characterized in that** the upper platform (1.35) has a central through opening (1.351) and at least one additional through opening (1.352) at a radial distance from the latter.

9. Transition body according to one of Claims 1 to 8, **characterized in that** the at least one metal casing sheet (1.33) defines the envelope surface of a truncated cone.

10. Tower for a wind energy plant with a lower tower section (1.1), which is formed from several corner posts (1.10) configured as hollow profiles, and an upper tower section (1.2) in the form of a tubular tower which is essentially round in cross section, **characterized in that** the upper tower section (1.2) and the lower tower section (1.1) are joined together by a transition body (1.3) according to one of Claims 1 to 9.

11. Tower according to Claim 10, **characterized in that** the respective corner post (1.10) is composed of several steel pipe profiles joined together in the lengthwise direction, being provided with perforated flanges (1.13) to accommodate bolts, and the corner posts (1.10) are joined together by cross struts (1.15) and/or tension struts (1.17) connected to the flanges (1.13).

12. Tower according to Claim 11, **characterized in that** the cross struts (1.15) are formed from essentially horizontally extending steel profiles.

13. Tower according to Claim 11 or 12, **characterized in that** the tension struts (1.17) are formed from diagonally extending wire cables.

## Revendications

1. Élément de transition (1.3) destiné à être disposé entre une portion inférieure et une portion supérieure d'une tour d'éolienne, la portion de tour inférieure (1.1) étant constituée de plusieurs montants d'angle (1.10) réalisés en tant que profils creux et la portion de tour supérieure (1.2) étant réalisée sous la forme d'une tour tubulaire de section transversale essentiellement ronde, comprenant un fond (1.31) et une bride de liaison (1.32) disposée au-dessus du fond pour la liaison de la portion de tour supérieure (1.2), le fond (1.31) et la bride de liaison (1.32) servant à la liaison de la portion de tour supérieure étant reliés l'un à l'autre par le biais d'au moins une tôle d'enveloppe (1.33), et au moins la liaison du fond (1.31) à l'au moins une tôle d'enveloppe (1.33) étant réalisée sous forme de construction soudée,
un nombre de plans de raccordement correspondant au nombre des montants d'angle (1.10) de la portion de tour inférieure (1.1) étant prévu au niveau du côté inférieur du fond (1.31), les plans de raccordement étant coudés les uns par rapport aux autres de telle sorte que dans la position de montage de l'élément de transition (1.3), le plan de raccordement respectif monte radialement vers l'extérieur, le fond (1.31) étant constitué de segments en forme de plaque (1.311), le segment respectif (1.311) présentant deux arêtes latérales droites convergentes (1.312), le plan de raccordement respectif du fond (1.31) étant pourvu d'alésages de fixation (1.38) disposés en cercle pour la liaison à l'un des montants d'angle (1.10).

2. Élément de transition selon la revendication 1, **caractérisé en ce que** la bride de liaison (1.32) servant à la liaison de la portion de tour supérieure (1.2) est montée sur une plate-forme supérieure (1.35), qui est disposée au-dessus du fond (1.31) et qui est également connectée à l'au moins une tôle d'enveloppe (1.33).

3. Élément de transition selon la revendication 1 ou 2, **caractérisé en ce que** des tôles intérieures (1.36) pour rigidifier l'élément de transition (1.3) sont soudées à l'au moins une tôle d'enveloppe (1.33) et au côté supérieur du fond (1.31).

4. Élément de transition selon les revendications 2 et 3, **caractérisé en ce que** les tôles intérieures (1.36) sont également soudées à la plate-forme supérieure (1.35).

5. Élément de transition selon la revendication 3 ou 4, **caractérisé en ce que** les tôles intérieures (1.36) s'étendent essentiellement radialement et verticalement.

6. Élément de transition selon l'une quelconque des revendications 3 à 5, **caractérisé en ce que** les tôles intérieures (1.36) sont soudées à la surface d'enveloppe (1.33) d'un puits (1.37), en particulier d'un puits tubulaire, définissant un passage vertical.

7. Élément de transition selon l'une quelconque des revendications 3 à 6, **caractérisé en ce que** la tôle intérieure respective (1.36) présente une ouverture de passage (1.361) ayant un diamètre d'au moins 60 cm.

8. Élément de transition selon la revendication 2 ou selon l'une quelconque des revendications 3 à 7 en combinaison avec la revendication 2, **caractérisé en ce que** la plate-forme supérieure (1.35) présente une ouverture de passage centrale (1.351) et au moins une ouverture de passage supplémentaire (1.352) espacée radialement de celle-ci.

9. Élément de transition selon l'une quelconque des revendications 1 à 8, **caractérisé en ce que** l'au moins une tôle d'enveloppe (1.33) définit la surface d'enveloppe d'un tronc de cône.

10. Tour d'éolienne comprenant une portion de tour inférieure (1.1) qui est formée de plusieurs montants d'angle (1.10) réalisés sous forme de profilés creux, et une portion de tour supérieure (1.2) en forme de tour tubulaire de section transversale essentiellement ronde, **caractérisée en ce que** la portion de tour supérieure (1.2) et la portion de tour inférieure (1.1) sont reliées l'une à l'autre par le biais d'un élément de transition (1.3) selon l'une quelconque des revendications 1 à 9.

11. Tour selon la revendication 10, **caractérisée en ce que** le montant d'angle respectif (1.10) est constitué de plusieurs profilés de tubes en acier reliés les uns aux autres dans la direction longitudinale, qui sont pourvus de brides perforées (1.13) pour recevoir des vis, les montants d'angle (1.10) étant reliés les uns aux autres par des traverses (1.15) et/ou des tirants (1.17) reliés aux brides (1.13).

12. Tour selon la revendication 11, **caractérisée en ce que** les traverses (1.15) sont formées de profilés en acier s'étendant essentiellement horizontalement.

13. Tour selon la revendication 11 ou 12, **caractérisée en ce que** les tirants (1.17) sont formés de câbles métalliques s'étendant en diagonale.
